# EUROPEAN PATENT APPLICATION

(11) **EP 4 675 731 A1**
(43) Date of publication of application: **07.01.2026**
(21) Application number: 24898070.8
(22) Date of filing: 26.11.2024
(51) Int. Cl.: H01M 10/04

(54) **INSERT DEVICE**

(30) Priority: 27.11.2023 KR 20230167313
(71) Applicant: LG ENERGY SOLUTION, LTD., Seoul 07335 (KR)
(72) Inventor: LEE, Ju-Ho, Daejeon 34122 (KR); LEE, Jun-Oh, Daejeon 34122 (KR); LEE, Gil-Young, Daejeon 34122 (KR)
(74) Representative: Goddar, Heinz J.
(86) International application number: PCT/KR2024/018845
(87) International publication number: WO 2025/116476

(57) **Abstract**

An insert device according to an embodiment of the present disclosure inserts an electrode assembly into a battery can, and the insert device includes a can holder holding the battery can, a lower stopper supporting the electrode assembly from below and configured to be movable in a direction parallel to a central axis of the electrode assembly, a side stopper configured to advance or retreat in a direction perpendicular to the central axis of the electrode assembly at a side of the electrode assembly, a transfer member configured to transfer the electrode assembly and the battery can, and a lower holder supporting the electrode assembly transferred by the transfer member from below and configured to be movable in a direction parallel to the central axis of the electrode assembly.

## Description

### TECHNICAL FIELD

The present disclosure relates to an insert device. More specifically, the present disclosure relates to an insert device for inserting an electrode assembly into a battery can.

This application is based on and claims priority from Korean Patent Application No. 10-2023-0167313, filed on November 27, 2023, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries and the like. An operating voltage of the unit secondary battery cell, namely a unit battery cell, is about 2.5 V to 4.5 V. Therefore, if a higher output voltage is required, a plurality of battery cells may be connected in series to form a battery pack. Additionally, depending on the charging and discharging capacity required for the battery pack, a plurality of battery cells may be connected in parallel to form a battery pack. Thus, the number of battery cells included in the battery pack may be variously set according to the required output voltage and/or the demanded charging and discharging capacity.

Meanwhile, in the cylindrical secondary battery manufacturing process, an insertion process of inserting an electrode assembly into a battery can is performed. In the insertion process, the electrode assembly is inserted into the battery can from the bottom to the top. Conventionally, a component called an insert ring that supports the electrode assembly from below was essential at this time. That is, in order for the opening of the battery can to rotate 180 degrees from the bottom to the top, a component capable of supporting and fixing the electrode assembly inserted into the battery can was required, and the insert ring performed the above role. However, such an insert ring had a problem of being an operation and process management point as a workpiece that is separately seated in a carrier.

### DISCLOSURE

### Technical Problem

The present disclosure is designed to solve the problems of the related art, and therefore the present disclosure is directed to reducing operation and process management points by removing the insert ring in the electrode assembly insertion process.

More specifically, the present disclosure is also directed to reducing management points for cleaning and/or abrasion of the insert ring by removing the insert ring.

In another aspect, the present disclosure is still also directed to preventing cases where the insert ring is abnormally seated in the carrier or the detachment due to external force occurs in the situation of supporting the electrode assembly.

However, technical problems to be solved by the present disclosure are not limited to the above-described problems, and other problems not mentioned herein may be clearly understood by those having ordinary skill in the art from the following description of the present disclosure.

### Technical Solution

An insert device according to an embodiment of the present disclosure for solving the above-described problem inserts an electrode assembly into a battery can, and the insert device may include a can holder holding the battery can; a lower stopper supporting the electrode assembly from below and configured to be movable in a direction parallel to a central axis of the electrode assembly; a side stopper configured to advance or retreat in a direction perpendicular to the central axis of the electrode assembly at a side of the electrode assembly; a transfer member configured to transfer the electrode assembly and the battery can; and a lower holder supporting the electrode assembly transferred by the transfer member from below and configured to be movable in a direction parallel to the central axis of the electrode assembly.

According to one aspect of the present disclosure, the can holder may be configured to hold the can so that an opening of the can faces downward and a closed portion of the can faces upward.

According to another aspect of the present disclosure, the lower stopper may be configured to insert the electrode assembly into the battery can.

Preferably, the lower stopper may be configured to push the electrode assembly positioned below the can upward to push the electrode assembly toward the opening of the battery can.

For example, the lower stopper may be configured to insert the electrode assembly only up to a predetermined point of the battery can.

According to still another aspect of the present disclosure, the lower stopper may be configured in a cylindrical shape.

Preferably, the radius of the lower stopper may be configured to be larger than the radius of the winding center hole of the electrode assembly.

According to still another aspect of the present disclosure, the lower stopper may include a polyetheretherketone.

According to one aspect of the present disclosure, the side stopper may be configured to support a lower portion of the electrode assembly by advancing in a direction perpendicular to the central axis of the electrode assembly in a state where the lower stopper inserts the electrode assembly into the battery can.

Preferably, the side stopper may be configured to support the lower portion of the electrode assembly while the transfer member transfers the electrode assembly and the battery can.

According to another aspect of the present disclosure, the lower holder may be configured to support the lower portion of the electrode assembly by moving upward toward the electrode assembly while the side stopper supports the lower portion of the electrode assembly.

According to still another aspect of the present disclosure, the side stopper may be configured to retreat in a direction perpendicular to the central axis of the electrode assembly after the lower holder supports the lower portion of the electrode assembly.

According to one aspect of the present disclosure, the lower holder may be configured to insert the electrode assembly into the battery can.

Preferably, the lower holder may be configured to insert the electrode assembly up to an end of the closed portion of the battery can.

Meanwhile, an insertion method according to an embodiment of the present disclosure for solving the above-described problem is a method for inserting an electrode assembly into a battery can, and the insertion method may include a first step in which a can holder holds the battery can; a second step in which a lower stopper supports the electrode assembly from below; a third step in which the lower stopper moves upward to insert the electrode assembly into the battery can up to a predetermined point of the battery can; a fourth step in which a side stopper advances in a direction perpendicular to a central axis of the electrode assembly at a side of the electrode assembly to support the lower portion of the electrode assembly; a fifth step in which a transfer member transfers the electrode assembly and the battery can to another position; a sixth step in which a lower holder supports the electrode assembly transferred by the transfer member from below; a seventh step in which the lower holder moves upward to insert the electrode assembly up to an end of the closed portion of the battery can; an eighth step of rotating the electrode assembly and the battery can 180 degrees; and a ninth step of separating the lower holder from the electrode assembly.

### Advantageous Effects

According to the present disclosure, operation and process management points may be reduced by removing the insert ring in the electrode assembly insertion process.

Additionally, according to the present disclosure, management points for cleaning and/or abrasion of the insert ring may be reduced by removing the insert ring.

Additionally, according to the present disclosure, it is possible to prevent cases where the insert ring is abnormally seated in the carrier or the detachment due to external force occurs in the situation of supporting the electrode assembly.

However, effects to be obtained by the present disclosure are not limited to the above-described effects, and other effects not mentioned herein may be clearly understood by those having ordinary skill in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view for describing a can supply step of an insert device according to an embodiment of the present disclosure.
FIG. 2 is an enlarged view of FIG. 1.
FIG. 3 is a view for describing a can centering step of an insert device according to an embodiment of the present disclosure.
FIG. 4 is a view for describing an electrode assembly centering step of an insert device according to an embodiment of the present disclosure.
FIG. 5 is a view for describing a spring cushion step of an insert device according to an embodiment of the present disclosure.
FIG. 6 is a view for describing a first insertion step of an electrode assembly of an insert device according to an embodiment of the present disclosure.
FIG. 7 is an enlarged view of FIG. 6.
FIG. 8 is a view for describing a side stopper advance step of an insert device according to an embodiment of the present disclosure.
FIG. 9 is an enlarged view of FIG. 8.
FIG. 10 is a view for describing a lower stopper original position step of an insert device according to an embodiment of the present disclosure.
FIG. 11 is a view for describing an electrode assembly and battery can handover step of an insert device according to an embodiment of the present disclosure.
FIG. 12 is an enlarged view of FIG. 11.
FIG. 13 is a view for describing a retreat state of a side stopper of an insert device according to an embodiment of the present disclosure.
FIG. 14 is a view for describing a second insertion step of an electrode assembly of an insert device according to an embodiment of the present disclosure.
FIG. 15 is a view for describing a cell rotation step of an insert device according to an embodiment of the present disclosure.
FIG. 16 is a view for describing a lower holder retreat step of an insert device according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Additionally, to help understanding of the present disclosure, the accompanying drawings are not drawn to actual scale, but dimensions of some components may be exaggerated.

In the cylindrical secondary battery manufacturing process, an insertion process of inserting an electrode assembly E into a battery can C is performed. In the insertion process, the electrode assembly E is inserted into the battery can C from the bottom to the top. Conventionally, a component called an insert ring that supports the electrode assembly E from below was essential at this time. That is, in order for the opening C1 of the battery can C to rotate 180 degrees from the bottom to the top, a component capable of supporting and fixing the electrode assembly E inserted into the battery can C was required, and the insert ring performed the above role.

However, such an insert ring had a problem of being an operation and process management point as a workpiece that is separately seated in a carrier. For example, if an insert ring exists, operation management for cleaning and/or abrasion of the insert ring is required. Additionally, if an insert ring exists, there may be a case in which the insert ring is abnormally seated in the carrier. Alternatively, in the situation of supporting the electrode assembly E, there may be a case in which the detachment due to external force occurs. That is, the insert ring requires the process management point as described above.

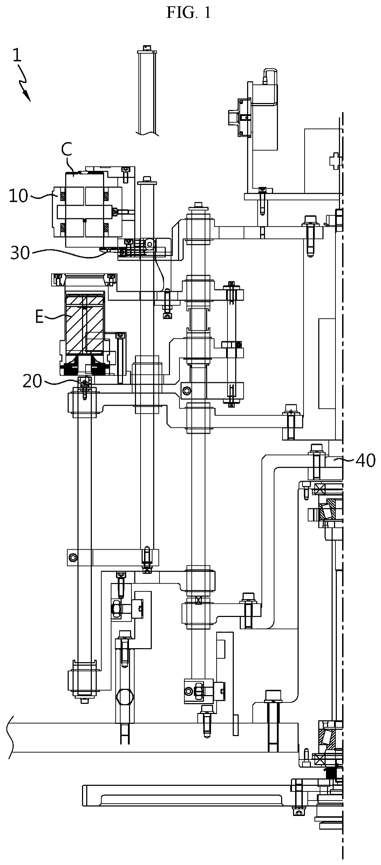

In the present disclosure, the insert ring is removed from the insert device 1 in recognition of the occurrence of such problems, and the role that the insert ring previously performed may be covered by the unique structure of other components. This will be described in detail with reference to FIGS. 1 to 16 below.

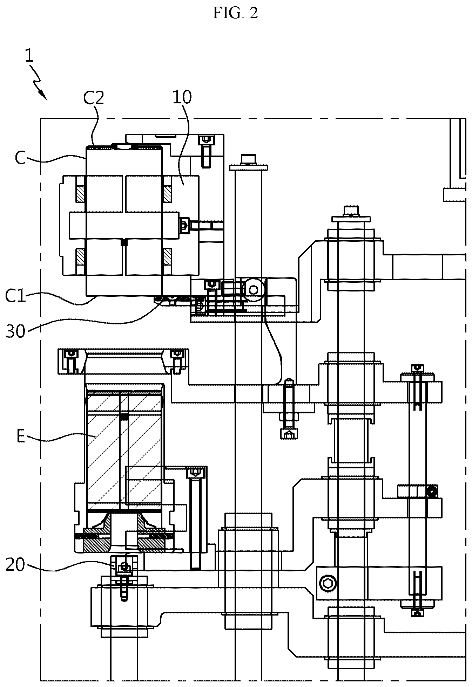

FIG. 1 is a view for describing a can supply step of an insert device 1 according to an embodiment of the present disclosure, and FIG. 2 is an enlarged view of FIG. 1.

Referring to FIGS. 1 and 2, an insert device 1 according to an embodiment of the present disclosure includes a can holder 10, a lower stopper 20, a side stopper 30, a transfer member 40, and a lower holder 50.

More specifically, the insert device 1 may include a can holder 10 holding the battery can C; a lower stopper 20 supporting the electrode assembly E from below and configured to be movable in a direction parallel to a central axis of the electrode assembly E; a side stopper 30 configured to advance or retreat in a direction perpendicular to the central axis of the electrode assembly E from a side of the electrode assembly E; a transfer member 40 configured to transfer the electrode assembly E and the battery can C; and a lower holder 50 supporting the electrode assembly E transferred by the transfer member 40 from below and configured to be movable in a direction parallel to the central axis of the electrode assembly E.

According to this structure, the electrode assembly E may be easily supported and inserted into the battery can C without an insert ring. Accordingly, all the problems associated with the presence of the insert ring may be solved. For example, the time and cost required for maintenance and repair of the insert ring may be reduced. As a result, processability may be improved. Additionally, damage to the electrode assembly E may be minimized.

The insert device 1 may be configured to insert the electrode assembly E in the form of a jelly roll into a cylindrical battery can C when manufacturing a cylindrical secondary battery. That is, the can holder 10 may be configured to hold the battery can C.

The can holder 10 may have a shape capable of gripping the cylindrical battery can C. For example, the can holder 10 may be configured in the form of clips whose inner surface is dug in a cylindrical shape to be able to grip the cylindrical shape. The can holder 10 may be configured to hold at least a portion of the battery can C in the longitudinal direction. For example, referring to FIG. 1, the can holder 10 may hold the battery can C at two points along the longitudinal direction of the battery can C. However, it is obvious that the can holder 10 of the present disclosure is not limited to such a shape. Any can holder 10 capable of holding the battery can C will be said to be included in the scope of the can holder 10 of the present disclosure.

In one aspect of the present disclosure, the can holder 10 may hold the can so that the opening C1 of the can faces downward and the closed portion C2 of the can faces upward.

For example, referring to FIGS. 1 and 2, the can holder 10 holds the battery can C so that the opening C1 of the battery can C faces downward and the closed portion C2 of the battery can C faces upward. That is, the electrode assembly E may be inserted into the opening C1 of the battery can C provided at the bottom of the battery can C and moved toward the closed portion C2 provided at the top of the battery can C.

In this way, the reason why the battery can C is configured such that the opening C1 thereof faces downward and the closed portion C2 thereof faces upward is to insert the electrode assembly E upward. For example, if the electrode assembly E is inserted downward, a free-fall method may be adopted. However, this free-fall method has the problem that the insertion speed may not be controlled and positive pressure is generated. On the other hand, the method of inserting the electrode assembly E downward while gripping it may unnecessarily complicate the structure of the can holder 10, which may lead to problems such as an increase in management points and a decrease in processability. Therefore, it is preferable that the electrode assembly E is inserted upward, and according to the above structure of the present disclosure, the electrode assembly E may be inserted in a direction from the bottom to the top. Accordingly, it becomes possible to insert the electrode assembly E while minimizing the generation of positive pressure with a simple structure.

That is, according to the processes of FIGS. 1 and 2, the battery can C may be supplied into the insert device 1 by such a can holder 10.

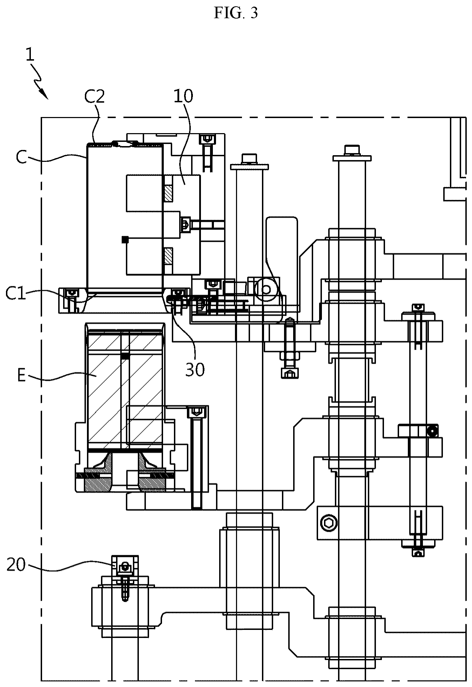

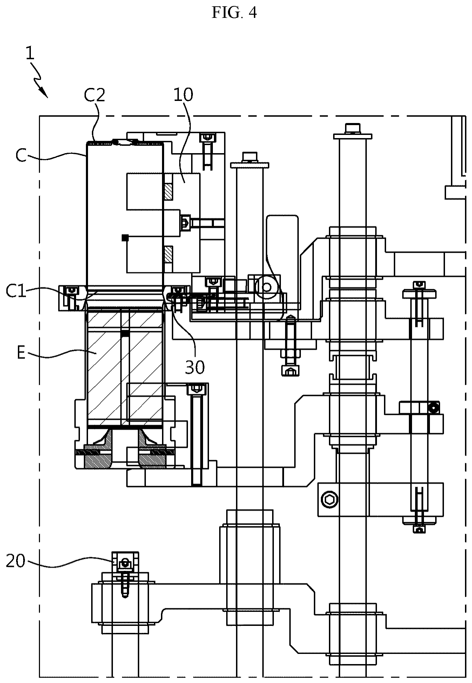

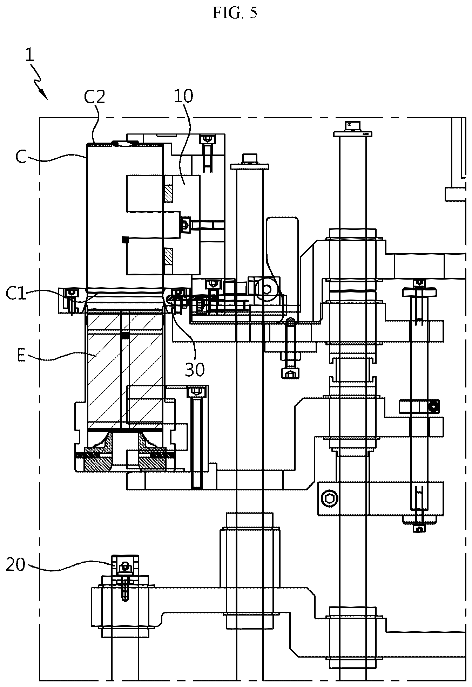

FIG. 3 is a view for describing a can centering step of an insert device 1 according to an embodiment of the present disclosure, and FIG. 4 is a view for describing an electrode assembly centering step of an insert device 1 according to an embodiment of the present disclosure. FIG. 5 is a view for describing a spring cushion step of an insert device 1 according to an embodiment of the present disclosure.

Referring to FIGS. 3 to 5, the center of the battery can C may be aligned and the center of the electrode assembly E may be aligned. Additionally, errors may be absorbed through the spring cushion step. That is, according to this structure of the present disclosure, the electrode assembly E may be stably inserted into the battery can C. That is, through the steps of FIGS. 3 to 5, the electrode assembly E may be in an optimal state of being inserted into the battery can C.

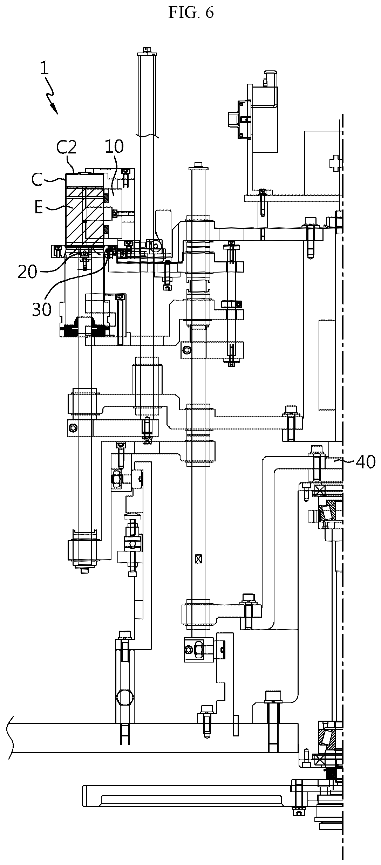

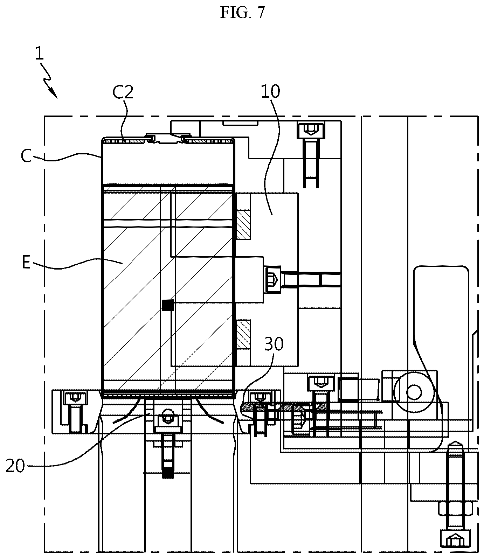

FIG. 6 is a view for describing a first insertion step of an electrode assembly E of an insert device 1 according to an embodiment of the present disclosure, and FIG. 7 is an enlarged view of FIG. 6.

In one aspect of the present disclosure, referring to FIGS. 6 and 7, the lower stopper 20 may be configured to insert the electrode assembly E into the battery can C.

Specifically, the lower stopper 20 may be configured to support the electrode assembly E from below. Additionally, the lower stopper 20 may be configured to be movable in a direction parallel to the central axis of the electrode assembly E. For example, the lower stopper 20 may push the electrode assembly E located below the can upward to push the electrode assembly E toward the opening C1 of the battery can C. That is, in the state of FIG. 5, the lower stopper 20 may push the electrode assembly E upward. Accordingly, the electrode assembly E passes through the opening C1 of the battery can C and rises toward the closed portion of the battery can C, which may result in the state of FIGS. 6 and 7.

According to this structure of the present disclosure, the electrode assembly E may be stably inserted into the battery can C without a separate component called an insert ring. Accordingly, management points for cleaning and/or abrasion of the insert ring may be reduced. Additionally, according to the present disclosure, it is possible to prevent cases where the insert ring is abnormally seated in the carrier or the detachment due to external force occurs in the situation of supporting the electrode assembly E.

In another aspect of the present disclosure, the lower stopper 20 may be configured to insert the electrode assembly E only up to a certain point between the opening C1 and the closed portion C2 of the battery can C.

For example, in the first insertion step of FIGS. 6 and 7, the lower stopper 20 may insert the electrode assembly E only up to a predetermined point in the longitudinal direction of the battery can C. For example, the lower stopper 20 may be configured to insert the electrode assembly E only up to a 2/3 point of the battery can C. If the electrode assembly E is inserted into the battery can C at one time, positive pressure may be generated inside the battery can C, and thus the electrode assembly E may not be smoothly inserted. In particular, when the outer diameter of the electrode assembly E and the inner diameter of the battery can C are almost the same, positive pressure may be generated more prominently. Accordingly, it is preferable not to insert the electrode assembly E at one time, but to insert a certain amount thereof step by step over a time period. Additionally, if the electrode assembly E is inserted up to the end of the closed portion C2 of the battery can C at one time, the electrode assembly E may be damaged even if there is a slight insertion error.

Therefore, according to this structure of the present disclosure, a delay time may be generated to induce the pressure inside the battery can C to be minimized. That is, according to the present disclosure, the electrode assembly E may be smoothly inserted into the battery can C. Additionally, damage to the electrode assembly E may be prevented.

In another aspect of the present disclosure, the lower stopper 20 may be configured in a roughly cylindrical shape. That is, the lower stopper 20 may be configured in the form of a roughly elongated rod, and the central axis of the rod may coincide with the central axis of the electrode assembly E.

In one aspect of the present disclosure, the radius of the lower stopper 20 may be configured to be larger than the radius of the winding center hole of the electrode assembly E. For example, the radius of the cylindrical lower stopper 20 may be configured to be slightly larger than the radius of the winding center hole of the electrode assembly E.

According to this structure, the radius of the lower stopper 20 is larger than the radius of the winding center hole of the electrode assembly E, so that the lower stopper 20 may support the electrode assembly E and the current collector plate from below. Additionally, since the radius of the cylindrical lower stopper 20 is slightly larger than the radius of the winding center hole of the electrode assembly E, the contact area between the lower stopper 20 and the electrode assembly E may be minimized. As a result, the possibility of damage to the electrode assembly E may be minimized.

In another embodiment, the radius of the lower stopper 20 may be configured to be larger than the radius of the current collector plate hole formed at the center of the current collector plate that is coupled to the electrode assembly E. For example, the radius of the lower stopper 20 may be configured to be larger than the radius of the current collector plate hole and smaller than or equal to the radius of the central region of the current collector plate.

According to this structure, the radius of the lower stopper 20 is larger than the radius of the current collector plate hole, so that the lower stopper 20 may support the electrode assembly E and the current collector plate from below. Additionally, since the radius of the lower stopper 20 is smaller than or equal to the radius of the central region of the current collector plate, the leg portion of the current collector plate extending from the outer circumference of the central region may not be affected by the lower stopper 20.

In still another aspect of the present disclosure, the lower stopper 20 may include a polyetheretherketone (PEEK) material. According to this embodiment, even if the lower stopper 20 comes into contact with the electrode assembly E and/or the current collector plate, damage may be minimized.

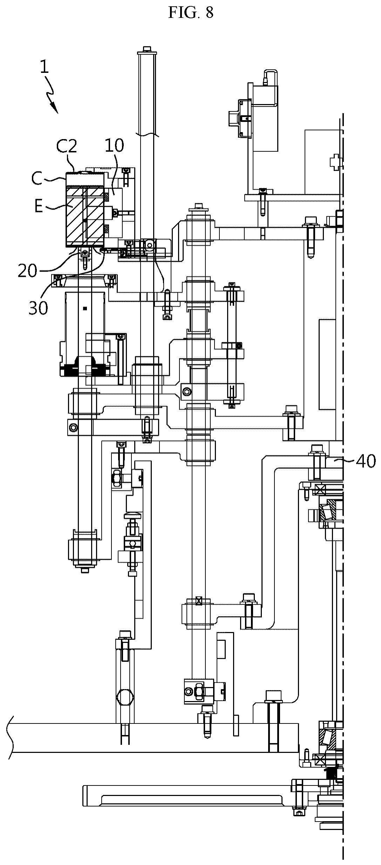

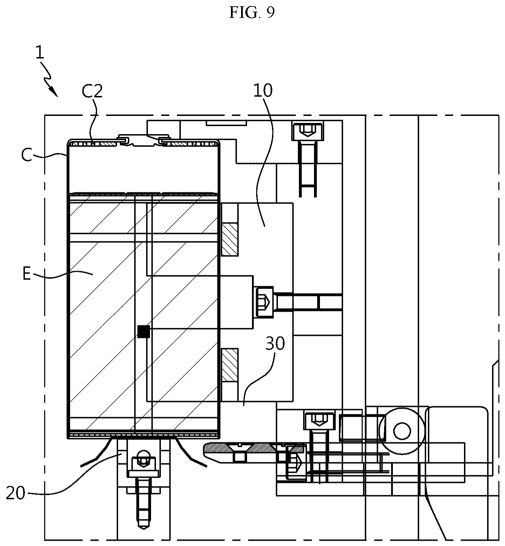

FIG. 8 is a view for describing a side stopper 30 advance step of an insert device 1 according to an embodiment of the present disclosure, and FIG. 9 is an enlarged view of FIG. 8.

In one aspect of the present disclosure, referring to FIGS. 8 and 9, the side stopper 30 may be configured to advance or retreat in a direction perpendicular to the central axis of the electrode assembly E at a side of the electrode assembly E. Specifically, the side stopper 30 may be configured to support the lower portion of the electrode assembly E by advancing in a direction perpendicular to the central axis of the electrode assembly E in a state where the lower stopper 20 inserts the electrode assembly E into the battery can C.

The side stopper 30 may enter, for example, only to the outer circumferential region of the electrode assembly E. More specifically, the side stopper 30 may enter the region between the negative electrode current collector plate coupled to the electrode assembly E and the electrode assembly E. For example, referring to FIG. 9, the negative electrode current collector plate is welded to the electrode assembly E in the central region and has the leg portion of the negative electrode current collector plate extending downward on the outer circumferential side. Here, the side stopper 30 may enter the region between the leg portion of the negative electrode current collector plate and the lower surface of the electrode assembly E. If the lower stopper 20 excessively enters the central side of the electrode assembly E, the contact area with the electrode assembly E is widened, which may not only increase the possibility of damage to the electrode assembly E, but also cause the side stopper 30 to damage the negative electrode current collector plate. Therefore, it is preferable that the side stopper 30 enters, for example, only to the region adjacent to the outer circumference of the electrode assembly E.

In still another aspect of the present disclosure, the side stopper 30 may include a polyetheretherketone (PEEK) material. According to this embodiment, even if the side stopper 30 comes into contact with the electrode assembly E, damage may be minimized.

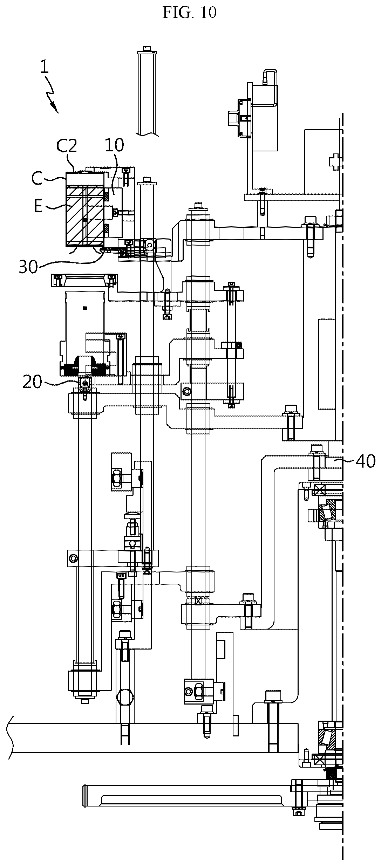

FIG. 10 is a view for describing a lower stopper 20 original position step of an insert device 1 according to an embodiment of the present disclosure.

Referring to FIG. 10, the lower stopper 20 may move in a direction parallel to the central axis of the electrode assembly E. More specifically, the lower stopper 20 may move downward and away from the electrode assembly E. That is, since the side stopper 30 is supporting the electrode assembly E, the lower stopper 20 may return to its original position and start preparing to support the next electrode assembly E.

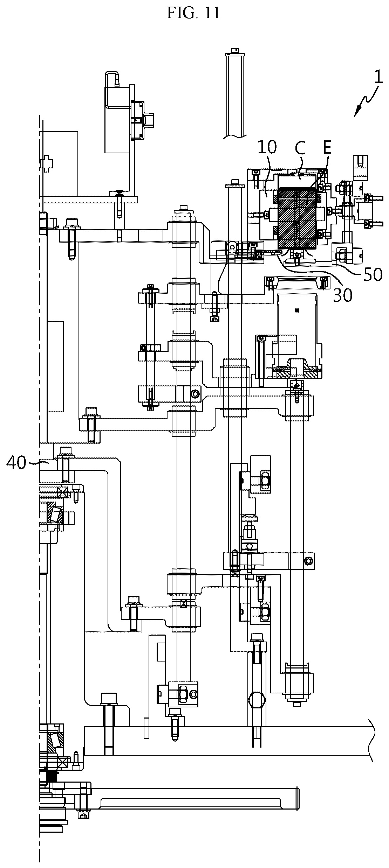

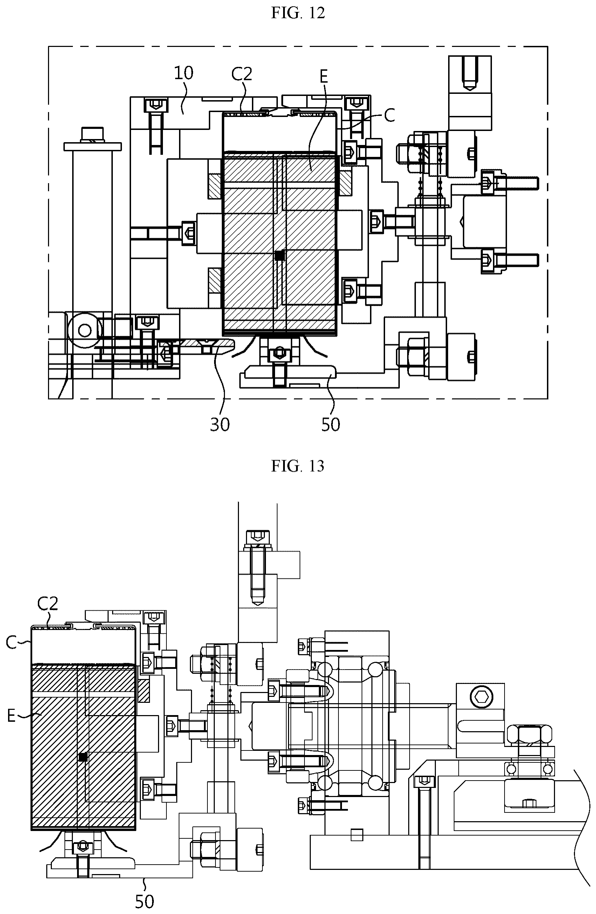

FIG. 11 is a view for describing an electrode assembly E and battery can C handover step of an insert device 1 according to an embodiment of the present disclosure, and FIG. 12 is an enlarged view of FIG. 11.

Referring to FIGS. 11 and 12, the insert device 1 may include a transfer member 40 configured to transfer the electrode assembly E and the battery can C. The transfer member 40 may transfer the electrode assembly E and the battery can C from one point to another. For example, in FIG. 10, the battery can C and the electrode assembly E are positioned on the left side based on the rotation axis, but in FIG. 11, the battery can C and the electrode assembly E are positioned on the right side based on the rotation axis. That is, the battery can C and the electrode assembly E may be transferred from one point to another by the transfer member 40. For example, as shown in FIGS. 11 and 12, a rotation axis and a gripping member connected to the rotation axis are provided, and as the rotation axis rotates, the battery can C and the electrode assembly E gripped by the gripping member may be transferred to another position. However, the transfer member 40 is not limited to such specific embodiments, and it will be said that any structure capable of transferring the electrode assembly E and the battery can C from one position to another is included in the scope of the transfer member 40 of the present disclosure.

Meanwhile, according to FIGS. 11 and 12, the side stopper 30 supports the electrode assembly E from below even during the transfer process. That is, the side stopper 30 may be configured to support the lower portion of the electrode assembly E while the transfer member 40 transfers the electrode assembly E and the battery can C.

Accordingly, the electrode assembly E may be transferred to another position while maintaining a state of being firstly inserted inside the battery can C.

FIG. 13 is a view for describing a retreat state of a side stopper 30 of an insert device 1 according to an embodiment of the present disclosure.

In one aspect of the present disclosure, referring to FIG. 13, the lower holder 50 may be configured to support the lower portion of the electrode assembly E by moving upward toward the electrode assembly E while the side stopper 30 supports the lower portion of the electrode assembly E. The lower holder 50 may be the same component as the existing lower stopper 20, or may be composed of different components.

While the side stopper 30 supports the electrode assembly E, the lower holder 50 may support the electrode assembly E from below. As a result, the side stopper 30 and the lower holder 50 may be in a state of simultaneously supporting the electrode assembly E. Subsequently, when the lower holder 50 completely supports the electrode assembly E, the side stopper 30 may be configured to retreat in a direction perpendicular to the central axis of the electrode assembly E after the lower holder 50 supports the lower portion of the electrode assembly E. That is, since the lower holder 50 supports the electrode assembly E, the side stopper 30 no longer needs to support the electrode assembly E and thus retreats. Accordingly, the contact area between the electrode assembly E and the side stopper 30 is eliminated, which may reduce the possibility of damage to the electrode assembly E.

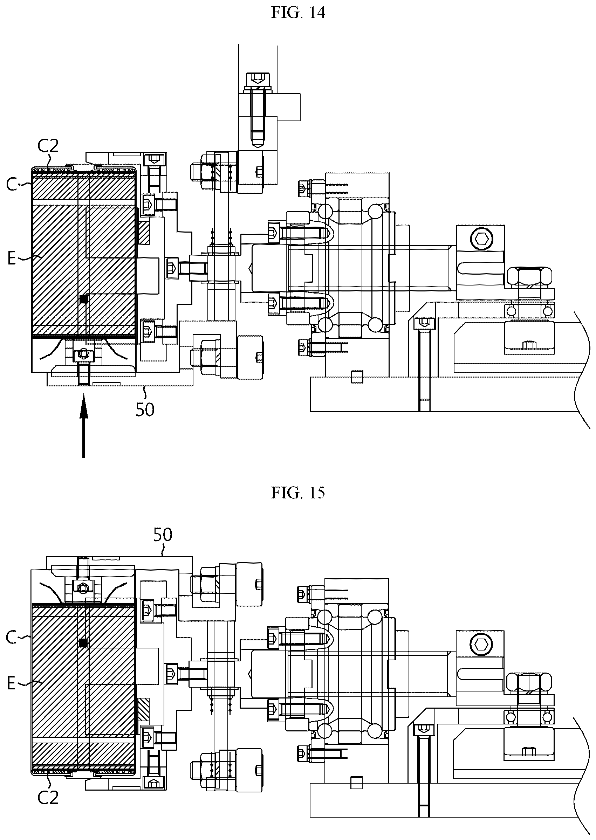

FIG. 14 is a view for describing a second insertion step of an electrode assembly E of an insert device 1 according to an embodiment of the present disclosure.

In another aspect of the present disclosure, referring to FIG. 14, the lower holder 50 may be configured to insert the electrode assembly E into the battery can C. The lower holder 50 may be configured to be movable in a direction parallel to the central axis of the electrode assembly E. For example, the lower holder 50 may be configured to move upward to push the electrode assembly E into the battery can C.

Preferably, the lower holder 50 may insert the electrode assembly E up to the end of the closed portion C2 of the battery can C. This will be referred to as a second insertion step. That is, in the second insertion step, the electrode assembly E may be inserted from a predetermined point in the longitudinal direction of the battery can C inserted in the first insertion step up to the end of the closed portion C2 of the battery can C.

When the electrode assembly E is inserted by dividing into two steps in this way, a delay time may be generated to suppress the generation of positive pressure in the battery can C. That is, according to the present disclosure, the electrode assembly E may be smoothly inserted into the battery can C.

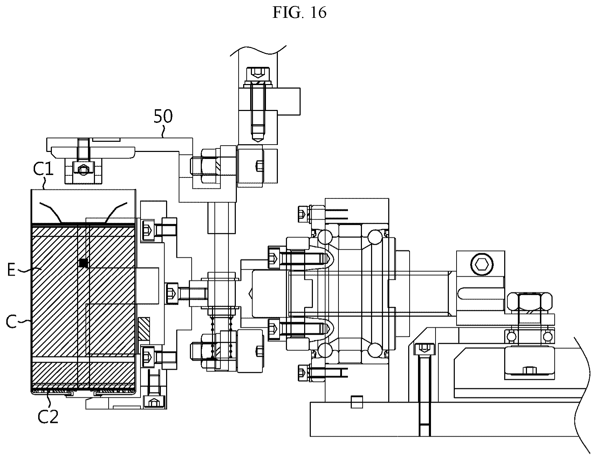

FIG. 15 is a view for describing a cell rotation step of an insert device 1 according to an embodiment of the present disclosure, and FIG. 16 is a view for describing a lower holder 50 retreat step of an insert device 1 according to an embodiment of the present disclosure.

Referring to FIGS. 15 and 16, in the insert device 1 according to an embodiment of the present disclosure, the battery can C into which the electrode assembly E is inserted may be rotated 180 degrees to be inverted upside down. At this time, the lower holder 50 supporting the electrode assembly E upward is also rotated 180 degrees. That is, the lower holder 50 is positioned at the upper portion by the rotation. More specifically, the lower holder 50 comes into contact with the electrode assembly E above the electrode assembly E after the 180-degree rotation. Thereafter, as shown in FIG. 16, the lower holder 50 may move in a direction away from the electrode assembly E. That is, the lower holder 50 may retreat from the electrode assembly E. When this step is completed, the electrode assembly E is completely inserted into the battery can C. More specifically, the electrode assembly E may be accommodated in the battery can C in a state where the opening C1 of the battery can C is erected to face upward. In a subsequent step, the battery can C may be handed over to another process. For example, the battery can C may be transferred to a beading crimping process.

Referring to FIGS. 1 to 16 as described above, an insertion method for inserting the electrode assembly E into the battery can C may include a first step S1 in which the can holder 10 holds the battery can C; a second step S2 in which the lower stopper 20 supports the electrode assembly E from below; a third step S3 in which the lower stopper 20 moves upward to insert the electrode assembly E into the battery can C up to a predetermined point of the battery can C; a fourth step S4 in which the side stopper 30 advances in a direction perpendicular to the central axis of the electrode assembly E from the side of the electrode assembly E to support the lower portion of the electrode assembly E; a fifth step S5 in which the transfer member 40 transfers the electrode assembly E and the battery can C to another position; a sixth step S6 in which the lower holder 50 supports the electrode assembly E transferred by the transfer member 40 from below; a seventh step S7 in which the lower holder 50 moves upward to insert the electrode assembly E up to the end of the closed portion C2 of the battery can C; an eighth step S8 of rotating the electrode assembly E and the battery can C 180 degrees; and a ninth step S9 of separating the lower holder 50 from the electrode assembly E.

According to the above embodiment, the electrode assembly E may be easily supported and inserted into the battery can C without an insert ring. Accordingly, all the problems associated with the presence of the insert ring may be solved. For example, the time and cost required for maintenance and repair of the insert ring may be reduced. As a result, processability may be improved. Additionally, damage to the electrode assembly E may be minimized.

Meanwhile, the terms indicating directions as used herein such as upper and lower are used for convenience of description only, and it is obvious to those skilled in the art that the terms may change depending on the position of the stated element or an observer.

The present disclosure has been hereinabove described with regard to a limited number of embodiments and drawings, but the present disclosure is not limited thereto and it is obvious that a variety of modifications and variations may be made thereto by those having ordinary skill in the technical field pertaining to the present disclosure within the technical aspect of the present disclosure and the scope of the appended claims and their equivalents.

### [Explanation of Reference Signs]

- 1: insert device
- E: electrode assembly
- C: battery can
- C1: opening
- C2: closed portion
- 10: can holder
- 20: lower stopper
- 30: side stopper
- 40: transfer member
- 50: lower holder

## Claims

1. An insert device for inserting an electrode assembly into a battery can, the insert device comprising:
a can holder holding the battery can;
a lower stopper supporting the electrode assembly from below and configured to be movable in a direction parallel to a central axis of the electrode assembly;
a side stopper configured to advance or retreat in a direction perpendicular to the central axis of the electrode assembly at a side of the electrode assembly;
a transfer member configured to transfer the electrode assembly and the battery can; and
a lower holder supporting the electrode assembly transferred by the transfer member from below and configured to be movable in a direction parallel to the central axis of the electrode assembly.

2. The insert device according to claim 1,
wherein the can holder holds the can so that an opening of the can faces downward and a closed portion of the can faces upward.

3. The insert device according to claim 1,
wherein the lower stopper is configured to insert the electrode assembly into the battery can.

4. The insert device according to claim 1,
wherein the lower stopper pushes the electrode assembly positioned below the can upward to push the electrode assembly toward the opening of the battery can.

5. The insert device according to claim 1,
wherein the lower stopper is configured to insert the electrode assembly only up to a predetermined point of the battery can.

6. The insert device according to claim 1,
wherein the lower stopper is configured in a cylindrical shape.

7. The insert device according to claim 6,
wherein the radius of the lower stopper is larger than the radius of the winding center hole of the electrode assembly.

8. The insert device according to claim 1,
wherein the lower stopper comprises a polyetheretherketone.

9. The insert device according to claim 3,
wherein the side stopper is configured to support a lower portion of the electrode assembly by advancing in a direction perpendicular to the central axis of the electrode assembly in a state where the lower stopper inserts the electrode assembly into the battery can.

10. The insert device according to claim 1,
wherein the side stopper is configured to support the lower portion of the electrode assembly while the transfer member transfers the electrode assembly and the battery can.

11. The insert device according to claim 9,
wherein the lower holder is configured to support the lower portion of the electrode assembly by moving upward toward the electrode assembly while the side stopper supports the lower portion of the electrode assembly.

12. The insert device according to claim 11,
wherein the side stopper is configured to retreat in a direction perpendicular to the central axis of the electrode assembly after the lower holder supports the lower portion of the electrode assembly.

13. The insert device according to claim 1,
wherein the lower holder is configured to insert the electrode assembly into the battery can.

14. The insert device according to claim 1,
wherein the lower holder is configured to insert the electrode assembly up to an end of the closed portion of the battery can.

15. An insertion method for inserting an electrode assembly into a battery can, the insertion method comprising:
a first step in which a can holder holds the battery can;
a second step in which a lower stopper supports the electrode assembly from below;
a third step in which the lower stopper moves upward to insert the electrode assembly into the battery can up to a predetermined point of the battery can;
a fourth step in which a side stopper advances in a direction perpendicular to a central axis of the electrode assembly at a side of the electrode assembly to support the lower portion of the electrode assembly;
a fifth step in which a transfer member transfers the electrode assembly and the battery can to another position;
a sixth step in which a lower holder supports the electrode assembly transferred by the transfer member from below;
a seventh step in which the lower holder moves upward to insert the electrode assembly up to an end of the closed portion of the battery can;
an eighth step of rotating the electrode assembly and the battery can 180 degrees; and
a ninth step of separating the lower holder from the electrode assembly.
